# EUROPÄISCHE PATENTSCHRIFT

(11) **EP 3 714 542 B1**
(45) Veröffentlichungstag und Bekanntmachung des Hinweises auf die Patenterteilung: **26.08.2026**
(21) Anmeldenummer: 18785597.8
(22) Anmeldetag: 10.10.2018
(51) Int. Cl.: H02P 29/60, H02P 21/00

(54) **VERFAHREN UND VORRICHTUNG ZUM BETREIBEN EINER ELEKTRISCHEN MASCHINE ZUR ABGABE EINES VORGEGEBENEN DREHMOMENTES UND EINER VORGEGEBENEN DREHZAHL**
METHOD AND DEVICE FOR OPERATING AN ELECTRIC MACHINE FOR OUTPUTTING A PREDFINED TORQUE AND A PREDEFINED ROTATIONAL SPEED
PROCÉDÉ ET DISPOSITIF DE FONCTIONNEMENT D'UNE MACHINE ÉLECTRIQUE POUR FOURNIR UN COUPLE PRÉDÉFINI ET UNE VITESSE DE ROTATION PRÉDÉFINIE

(30) Priorität: 20.11.2017 DE 102017220685
(43) Veröffentlichungstag der Anmeldung: 30.09.2020
(73) Patentinhaber: Robert Bosch GmbH, 70442 Stuttgart (DE)
(72) Erfinder: BANGERTER, Michael, 71739 Oberriexingen (DE); ROSEN, Alexander, 49078 Osnabrueck (DE)
(86) Internationale Anmeldenummer: PCT/EP2018/077599
(87) Internationale Veröffentlichungsnummer: WO 2019/096497

(56) Entgegenhaltungen:
- WO-A1-2010/116769
- DE-A1- 102012 211 315
- JP-A- 2002 095 300
- JP-A- 2008 155 683
- US-A1- 2011 025 238
- US-A1- 2017 294 865

## Beschreibung

Die Erfindung betrifft ein Verfahren und eine Vorrichtung zum Betreiben einer elektrischen Maschine zur Abgabe eines vorgegebenen Drehmomentes und einer vorgegebenen Drehzahl. Ferner betrifft die Erfindung eine Logikeinheit, einen Antriebsstrang mit einer entsprechenden Logikeinheit und ein Fahrzeug mit einem entsprechenden Antriebsstrang sowie ein Computerprogramm und ein maschinenlesbares Speichermedium.

### Stand der Technik

Ein elektrischer Antrieb, insbesondere eine elektrische Maschine, erwärmt sich beim Betrieb. Damit eine elektrische Maschine ein Drehmoment abgeben und rotieren kann, sind in eine elektrische Maschine Magnete eingelassen, insbesondere in den Rotor. Die Materialeigenschaften von Magneten sind temperaturabhängig. Je höher die Temperatur der Magnete, desto kleiner ist die zulässige magnetische Gegenfeldbelastung. Wird die zulässige magnetische Gegenfeldbelastung mittels eines anliegenden magnetischen Gegenfeldes überschritten, so entmagnetisieren die Magnete irreversibel. Eine elektrische Maschine liefert mit zumindest teilweise entmagnetisierten Magneten nicht mehr die spezifizierte Leistung bzw. fällt vollständig aus wenn die Magnete entmagnetisiert sind. Bei dem Betrieb einer elektrischen Maschine werden die Magnete einem magnetischen Gegenfeld ausgesetzt. Solange dieses kleiner als die zulässige magnetische Gegenfeldbelastung ist, nehmen die Magnete keinen Schaden. Mit steigender Belastung der elektrischen Maschine, sowohl motorisch als auch generatorisch, und damit verbundenen steigenden Phasenströmen durch die elektrische Maschine, wird das sich ausbildende magnetische Gegenfeld innerhalb der elektrischen Maschine größer. Sehr große Phasenstromamplituden innerhalb der elektrischen Maschine ergeben sich kurzfristig beim Einschalten des sogenannten aktiven Kurzschlusses der elektrischen Maschine. Dazu werden die beispielsweise drei Phasen einer elektrischen Maschine mittels des Inverters auf ein gemeinsames Potential, insbesondere das negative Potential einer Batterie, geschaltet. In den aktiven Kurzschluss wird eine elektrische Maschine geschaltet, wenn ein Fehlerfall im elektrischen Antriebssystem vorliegt, damit die elektrische Maschine in einen sicheren Zustand übergeht. Diagramme, bei denen das Drehmoment der elektrischen Maschine über deren Drehzahl dargestellt ist und die Größe der entstehenden Stromamplituden bei Einschalten eines aktiven Kurzschlusses eingezeichnet sind, zeigen, dass sich die größten Phasenstromamplituden innerhalb der elektrischen Maschine ausbilden, wenn im generatorischen Eckpunkt der aktive Kurzschluss eingeschaltet wird. In diesem Betriebspunkt bildet sich entsprechend das stärkste magnetische Gegenfeld innerhalb der elektrischen Maschine aus, welches die Magnete belastet. Für einen sicheren Betrieb einer elektrischen Maschine muss das Einschalten in den aktiven Kurzschluss jederzeit möglich sein. Um im Fehlerfall einen Schaden oder einen Defekt an der elektrischen Maschine zu vermeiden muss daher sichergestellt sein, dass das entstehende magnetische Gegenfeld stets kleiner ist als die zulässige magnetische Gegenfeldbelastung. Da die zulässige magnetische Gegenfeldbelastung mit steigender Temperatur abnimmt muss der Betriebsbereich der elektrischen Maschine mit steigender Temperatur eingeschränkt werden. Bisher wird hierzu bei steigender Temperatur der elektrischen Maschine das abzugebende Drehmoment limitiert. Folglich sind die beim Einschalten eines aktiven Kurzschlusses entstehenden Stromamplituden und das entstehende magnetische Gegenfeld geringer als bei geringen Temperaturen. So wird ein sicherer Betrieb der elektrischen Maschine über einen großen Temperaturbereich gewährleistet. Nachteilig ist dabei jedoch, dass das abgebbare Drehmoment bei höheren Temperaturen limitiert ist. Für den Fall, dass ein derartiger Antrieb in einem Fahrzeug eingebaut ist, bedeutet dies für den Fahrer eines Fahrzeugs, dass das Fahrzeug abhängig von der Temperatur der elektrischen Maschine unterschiedlich stark beschleunigt.

Die beim Einschalten des aktiven Kurzschluss auftretende Feldbelastung legt im Stand der Technik damit die Rotorgrenztemperatur fest und beeinflusst damit unmittelbar auch die erzielbare Dauerperformance oder Dauerleistungsfähigkeit bezüglich Drehmoment oder Leistung der elektrischen Maschine. Neben der Limitierung des abgebbaren Drehmomentes kann die Kühlung des Rotors verbessert werden, um die Magnettemperatur zu senken, z.B. durch aktive Flüssigkeitskühlung der Rotorwelle. Alternativ kann auch die Maschine überdimensioniert ausgelegt werden, um eine Erwärmung des Rotors zu verzögern. Eine andere Lösung ist die Verwendung von Magnetmaterial mit höherem Anteil schwerer seltener Erden, die geringere Neigung zur Entmagnetisierung aufweisen.

Daher besteht Bedarf für Lösungen, die eine Einschränkung des Betriebsbereiches einer elektrischen Maschine in Abhängigkeit der Temperatur, insbesondere die Limitierung des abzugebenden Drehmomentes, zumindest minimieren, insbesondere ohne bauliche Änderungen an der Maschine oder deren Auslegung vorzunehmen. Vorteilhaft wird das erzielbare Dauermoment und die erzielbare Dauerleistung der elektrischen Maschine erhöht.

Die DE 10 2012 211315 A1 offenbart ein Verfahren zur Temperaturkompensation von feldschwächendem Strom für elektrische Motoren.

JP 2008 155683 A offenbart eine elektrische Servolenkvorrichtung, die das Lenken unterstützt, indem sie eine d-Achse und eine q-Achse eines bürstenlosen Gleichstrommotors steuert.

JP 2002 095300 A offenbart ein Steuerverfahren für einen Permanentmagnet-Synchronmotor, welches die Klemmenspannung des Permanentmagnet-Synchronmotors so steuert, dass sie konstant ist.

WO 2010/116769 A1 offenbart eine Feldschwächungssteuerung zum Steuern der Drehung einer Permanentmagnet-Synchronmaschine die sich mit hoher Geschwindigkeit dreht, so dass die Klemmenspannung der Permanentmagnet-Synchronmaschine konstant bleibt.

### Offenbarung der Erfindung

Es wird ein Verfahren durch die Merkmale des unabhängigen Anspruchs 1 definiert.

Es wird ein Verfahren zum Betreiben oder Regeln einer elektrischen Maschine bereitgestellt. Die elektrische Maschine wird derart betrieben, dass ein vorgegebenes Drehmoment von der Maschine abgegeben oder aufgenommen wird und die Drehzahl der elektrischen Maschine dabei einer vorgegebenen Drehzahl entspricht. Im Idealfall stimmen die Istwerte bei dem Betrieb oder bei der Regelung mit den vorgegebenen Werten überein, eine minimale Abweichung erfolgt gegebenenfalls aufgrund einer begrenzten Regelgüte des verwendeten Reglers. Um die Formulierungen nicht zu verlängern umfasst im Rahmen dieser Beschreibung die "Abgabe eines Drehmomentes" auch die "Aufnahme eines Drehmomentes". Beispielsweise bei dem generatorischen Betrieb einer elektrischen Maschine während des Schubbetriebes eines Fahrzeuges. Gleichermaßen umfasst die Formulierung "Abgabe einer vorgegebenen Drehzahl" positive als auch negative Drehzahlen, die sich aufgrund des Betreibens oder des Regelns der elektrischen Maschine ergeben. Für das Betreiben der elektrischen Maschine werden zwei Betriebsmodi bereitgestellt. Die unterschiedlichen Betriebsmodi können mittels Hardware oder Software realisiert sein. Dies können unterschiedliche Reglerbausteine, Softwarealgorithmen, zu verwendende Parametersätze oder Kennlinien oder Filterbausteine sein. Weiter wird eine Temperatur der elektrischen Maschine erfasst. Dies bedeutet, es wird eine Temperatur erfasst, die eine Bestimmung mindestens einer Temperatur einer Komponente der elektrischen Maschine, beispielsweise des Gehäuses, des Stators oder des Rotors oder der Magnete der elektrischen Maschine ermöglicht. In Abhängigkeit der erfassten Temperatur erfolgt das Betreiben der elektrischen Maschine in einem ersten oder einem zweiten Betriebsmodus. Wenn die Temperatur einen, bevorzugt vorgebbaren, Schwellenwert unterschreitet erfolgt das Betreiben der elektrischen Maschine im ersten Betriebsmodus. Bevorzugt ist dies das gewöhnliche Betreiben der elektrischen Maschine zur Abgabe des vorgegebenen Drehmomentes und der vorgegeben Drehzahl. Bevorzugt erfolgt das Betreiben der elektrischen Maschine hierbei effizient mit möglichst wenig elektrischen Verlusten. Wenn die Temperatur diesem Schwellenwert entspricht oder diesen Schwellenwert überschreitet, so erfolgt das Betreiben der elektrischen Maschine im zweiten Betriebsmodus. Dabei ist der magnetische Statorfluss der elektrischen Maschine reduziert im Vergleich zu dem magnetischen Statorfluss der elektrischen Maschine, wenn das Betreiben im ersten Betriebsmodus mit der Abgabe des vorgegebenen Drehmomentes und der vorgegebenen Drehzahl erfolgt. Insbesondere stellen sich bei dem Betreiben im zweiten Betriebsmodus erhöhte elektrische Verluste im Inverter und in der elektrischen Maschine ein. Dabei überwiegt jedoch der vorteilhafte Effekt der Reduktion der potentiellen kurzfristigen Stromamplituden gegenüber den nachteilig leicht erhöhten Verlusten bei dem Betreiben im zweiten Betriebsmodus. Vorteilhaft verursacht ein Einschalten eines aktiven Kurzschlusses bei reduzierten magnetischen Statorfluss in der elektrischen Maschine signifikant kleinere kurzfristige Stromamplituden, beispielsweise 20 % kleinere Stromamplituden, sodass sich ein geringeres magnetisches Gegenfeld aufbaut. Somit wird selbst für den Fall, dass ein Einschalten des aktiven Kurzschluss notwendig wird, eine Entmagnetisierung der Magnete der elektrischen Maschine vermieden, trotz erhöhter Temperaturen und bei Abgabe des vorgegebenen Drehmomentes und der vorgegebenen Drehzahl. Insbesondere führt die Reduktion des Statorflusses zu einer Reduktion des maximal erreichbaren Drehmoments, beispielsweise um 10%. Diese Einschränkung ist im hier beschriebenen Ansatz jedoch signifikant geringer als die reine Drehmomentlimitierung, beispielsweise um 30%, in Abhängigkeit der Temperatur.

In einer anderen Ausgestaltung der Erfindung erfolgt in dem zweiten Betriebsmodus die Reduktion des magnetischen Statorflusses der elektrischen Maschine mittels des Feldschwächreglers.

Die Reduktion des magnetischen Statorflusses bei Abgabe des vorgegebenen Drehmomentes und der vorgegebenen Drehzahl erfolgt mittels des Feldschwächreglers. Insbesondere begrenzt ein Feldschwächregler bei Erreichen der maximalen Phasenspannung drehzahlabhängig den Statorfluss für den Betrieb einer Maschine bei hohen Drehzahlen. Diese Funktionalität wird in dem zweiten Betriebsmodus erweitert, indem, insbesondere zusätzlich, der Statorfluss in Abhängigkeit der erfassten Temperatur reduziert wird. Insbesondere reduziert sich damit die maximal entstehende Gegenfeldstärke beim Einschalten des aktiven Kurzschlusses. Vorteilhaft wird eine Möglichkeit zur Reduktion des Statorflusses der elektrischen Maschine bereitgestellt, der einen Betrieb der elektrischen Maschine bei erhöhten Temperaturen und bei Abgabe des vorgegebenen Drehmomentes und der vorgegebenen Drehzahl ermöglicht.

In einer anderen Ausgestaltung der Erfindung erfolgt in dem zweiten Betriebsmodus die Reduktion des magnetischen Statorflusses der elektrischen Maschine mittels einer Erhöhung des negativen d-Stroms

Die Reduktion des magnetischen Statorflusses bei Abgabe des vorgegebenen Drehmomentes und der vorgegebenen Drehzahl erfolgt mittels einer Erhöhung des negativen d-Stroms. Insbesondere wird mittels einer Variation des negativen d-Stroms die Höhe des Statorflusses variiert. Insbesondere bei geringen Drehzahlen wird der negative d-Strom erhöht, um den maximalen Wirkungsgrad und das Drehmoment der Maschine zu erhöhen. Dieses Verfahren ist im Stand der Technik als MTPA (Maximum Torque per Ampere) oder MMPA (Maximales Moment pro Ampere) bekannt. Diese Funktionalität wird im zweiten Betriebsmodus erweitert und der negative d-Strom, insbesondere gegenüber dem MTPA Verfahren, in Abhängigkeit der erfassten Temperatur erhöht und damit der Statorfluss reduziert. Insbesondere reduziert sich damit die maximal entstehende Gegenfeldstärke beim Einschalten des aktiven Kurzschlusses. Vorteilhaft wird eine Möglichkeit zur Reduktion des Statorflusses der elektrischen Maschine bereitgestellt, der einen Betrieb der elektrischen Maschine bei erhöhten Temperaturen und bei Abgabe des vorgegebenen Drehmomentes und der vorgegebenen Drehzahl ermöglicht.

In einer anderen Ausgestaltung der Erfindung erfolgt in dem zweiten Betriebsmodus mit steigender erfasster Temperatur der elektrischen Maschine eine stärkere Reduktion des magnetischen Statorflusses der elektrischen Maschine.

Je höher die erfasste Temperatur desto geringer die zulässige Gegenfeldstärke der Magnete. Zur Vermeidung einer möglichen Entmagnetisierung der Magnete wird der magnetische Statorfluss mit steigender Temperatur weiter reduziert. Vorteilhaft ergeben sich bei einem Einschalten eines aktiven Kurzschlusses bei weiter reduzierten magnetischen Statorfluss in der elektrischen Maschine weiter verringerte kurzfristige Stromamplituden, sodass sich ein geringeres magnetisches Gegenfeld aufbaut und eine Schädigung der Magnete vermieden wird.

In einer anderen Ausgestaltung der Erfindung umfasst das Erfassen der Temperatur die Ermittlung der Temperatur des Rotors der elektrischen Maschine oder der Magnete der elektrischen Maschine.

Das Erfassen der Temperatur der elektrischen Maschine umfasst bevorzugt die Ermittlung der Temperatur des Rotors, in den die Magnete eingebaut sind, oder die Ermittlung der Temperatur der Magnete selbst. Hierzu kann ein oder können beispielsweise mehrere Sensoren verwendet werden, die direkt an den jeweiligen Komponenten die Temperatur aufnehmen. Auch mittels indirekter Messungen kann, bevorzugt unter Verwendung thermischer Modellbildungen, auf die Temperaturen der Magnete oder des Rotors geschlossen werden. Vorteilhaft erlaubt die genaue Kenntnis der Temperatur der Magnete eine genaue Bestimmung der notwendigen Reduktion des Statorflusses, welche dafür ausreicht, eine Entmagnetisierung der Magnete in der elektrischen Maschine sicher zu verhindern.

Ferner betrifft die Erfindung ein Computerprogramm, das eingerichtet ist, eines der bisher beschriebenen Verfahren auszuführen.

Ferner betrifft die Erfindung ein maschinenlesbares Speichermedium, auf dem das beschriebene Computerprogramm gespeichert ist.

Ferner betrifft die Erfindung eine Logikeinheit, welche durch die Merkmale des unabhängigen Anspruchs 8 definiert ist.

Es wird eine Logikeinheit bereitgestellt, welche zum Betreiben oder Regeln einer elektrischen Maschine eingerichtet ist. Die elektrische Maschine wird derart betrieben, dass ein vorgegebenes Drehmoment von der Maschine abgegeben oder aufgenommen wird und die Drehzahl der elektrischen Maschine dabei einer vorgegebenen Drehzahl entspricht. Im Idealfall stimmen die Istwerte bei dem Betrieb oder bei der Regelung mit den vorgegebenen Werten überein, eine minimale Abweichung erfolgt gegebenenfalls aufgrund einer begrenzten Regelgüte des verwendeten Reglers. Für das Betreiben der elektrischen Maschine sind zwei Betriebsmodi vorgesehen. Die unterschiedlichen Betriebsmodi können mittels Hardware oder Software realisiert sein. Weiter erfasst die Logikeinheit eine Temperatur der elektrischen Maschine. In Abhängigkeit der erfassten Temperatur erfolgt das Betreiben der elektrischen Maschine in einem ersten oder einem zweiten Betriebsmodus. Wenn die Temperatur einen, bevorzugt vorgebbaren, Schwellenwert unterschreitet erfolgt das Betreiben der elektrischen Maschine im ersten Betriebsmodus. Wenn die Temperatur diesem Schwellenwert entspricht oder diesen Schwellenwert überschreitet, so erfolgt das Betreiben der elektrischen Maschine im zweiten Betriebsmodus. Dabei ist der magnetische Statorfluss der elektrischen Maschine reduziert im Vergleich zu dem magnetischen Statorfluss der elektrischen Maschine, wenn das Betreiben im ersten Betriebsmodus mit der Abgabe des vorgegebenen Drehmomentes und der vorgegebenen Drehzahl erfolgt. Vorteilhaft verursacht ein Einschalten eines aktiven Kurzschlusses bei reduzierten magnetischen Statorfluss in der elektrischen Maschine signifikant kleinere kurzfristige Stromamplituden, sodass sich ein geringeres magnetisches Gegenfeld aufbaut. Somit wird selbst für den Fall, dass ein Einschalten des aktiven Kurzschluss notwendig wird, eine Entmagnetisierung der Magnete der elektrischen Maschine vermieden, trotz erhöhter Temperaturen und bei Abgabe des vorgegebenen Drehmomentes und der vorgegebenen Drehzahl.

Ferner betrifft die Erfindung eine Vorrichtung mit einer beschriebenen Logikeinheit. Diese Vorrichtung ist insbesondere eine elektrische Maschine oder ein Steuergerät oder ein Inverter.

Es wird eine Vorrichtung bereitgestellt, die die beschriebene Logikeinheit umfasst. Bevorzugt umfasst die Vorrichtung neben der Logikeinheit beispielsweise Leistungshalbleiterschalter mittels derer eine Versorgungsspannung in eine dreiphasige Wechselspannung gewandelt werden zur Versorgung der elektrischen Maschine. Diese Vorrichtung kann insbesondere ein Steuergerät, ein Pulswechselrichter oder in einem integrierten Fall eine elektrische Maschine selbst sein.

Vorteilhaft werden verschiedene Varianten zur Integration einer Logikeinheit für ein optimiertes Betreiben einer elektrischen Maschine bereitgestellt.

Ferner betrifft die Erfindung einen Antriebsstrang eines Fahrzeugs mit einer beschriebenen Vorrichtung. Insbesondere umfasst der Antriebsstrang eine Steuereinheit oder einen Inverter für die Ansteuerung der elektrischen Maschine. Bevorzugt umfasst der Antriebsstrang weiter eine Batterie zur Versorgung der elektrischen Maschine mit elektrischer Energie mittels des Inverters. Ebenso kann mittels des Inverters auch die elektrische Energie, die beim generatorischen Betreiben der elektrischen Maschine entsteht, in die Batterie gespeist werden. Ein derartiger Antriebsstrang dient beispielweise dem Antrieb eines elektrifizierten Fahrzeugs. Mittels des Verfahrens und der Vorrichtung wird ein sicherer Betrieb des Antriebsstrangs ermöglicht.

Ferner betrifft die Erfindung ein Fahrzeug mit einem beschriebenen Antriebsstrang. Vorteilhaft wird somit ein Fahrzeug bereitgestellt, welches mittels des Verfahrens und der Vorrichtung sicher betrieben werden kann, wobei ein Entmagnetisieren der Magnete sicher vermieden wird, trotz erhöhter Temperaturen der elektrischen Maschine und bei Abgabe des vorgegebenen Drehmomentes und der vorgegebenen Drehzahl.

Es versteht sich, dass die Merkmale, Eigenschaften und Vorteile des erfindungsgemäßen Verfahrens entsprechend auf die Logikeinrichtung, die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer Vorrichtung mit einer Logikeinheit zum Betreiben einer elektrischen Maschine,
Figur 2
   ein schematisch dargestelltes Fahrzeug mit einem Antriebsstrang
Figur 3
   ein schematisch dargestelltes Ablaufdiagramm für ein Verfahren zum Betreiben einer elektrischen Maschine.

### Ausführungsformen der Erfindung

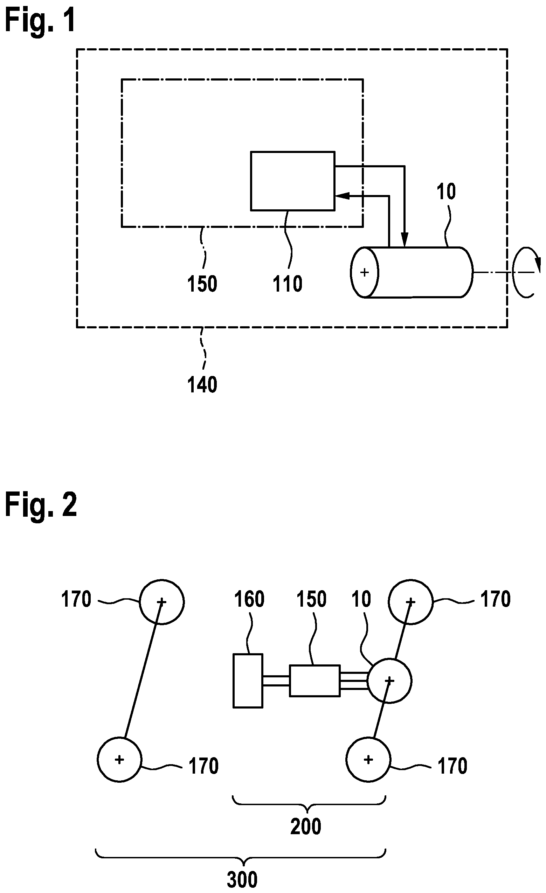

Die Figur 1 zeigt eine Vorrichtung 140, welche eine Steuereinheit 150 und eine Logikeinheit 110 für das Betreiben einer elektrischen Maschine 10 umfasst. In Abhängigkeit einer erfassten Temperatur der elektrischen Maschine 10 betreibt oder regelt die Logikeinheit 110 die elektrische Maschine 10. Die Logikeinheit 110 kann getrennt von der elektrischen Maschine 10, beispielsweise in einem Steuergerät 150 oder in einem Wechselrichter angeordnet sein. Weiter kann die Logikeinheit 110, das Steuergerät 150 und/ oder die elektrische Maschine 10 gemeinsam innerhalb eines Gehäuses oder innerhalb einer Vorrichtung 140 angeordnet sein.

Die Figur 2 zeigt ein schematisch dargestelltes Fahrzeug 300 mit einem Antriebsstrang 200. Die Darstellung zeigt beispielhaft ein Fahrzeug mit vier Rädern 170, wobei die Erfindung gleichermaßen in beliebigen Fahrzeugen mit einer beliebigen Anzahl an Rädern zu Lande, zu Wasser und in der Luft einsetzbar ist. Der Antriebsstrang 200 umfasst beispielsweise eine Batterie 160 zur Versorgung der elektrischen Maschine 10 des Antriebsstrangs 200. Weiter umfasst der Antriebsstrang bevorzugt ein Steuergerät 150 oder einen Wechselrichter, welcher einen Gleichstrom aus der Batterie 160 in einen Wechselstrom umwandelt. Die elektrische Maschine 10 ist wenigstens mit einem der Räder 170 gekoppelt und dazu eingerichtet, dieses anzutreiben.

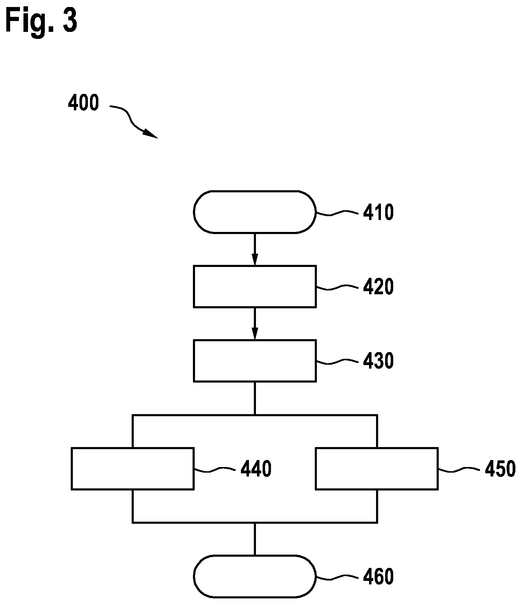

Die Figur 3 zeigt einen schematischen Ablauf eines Verfahrens 400 zum Betreiben einer elektrischen Maschine 10 zur Abgabe eines vorgegebenen Drehmomentes und einer vorgegebenen Drehzahl. Mit Schritt 410 beginnt das Verfahren. In Schritt 420 werden ein erster und ein zweiter Betriebsmodus für das Betreiben der elektrischen Maschine 10 bereitgestellt. In Schritt 430 wird eine Temperatur der elektrischen Maschine 10 erfasst. Das Betreiben der elektrischen Maschine 10 erfolgt in Schritt 440 in dem ersten Betriebsmodus wenn die erfasste Temperatur einen Schwellenwert unterschreitet. Das Betreiben der elektrischen Maschine 10 erfolgt in Schritt 450 in dem zweiten Betriebsmodus wenn die erfasste Temperatur dem Schwellenwert entspricht oder diesen überschreitet. Bei dem Betreiben der elektrischen Maschine 10 in dem zweiten Betriebsmodus, mit der resultierenden Abgabe des vorgegebenen Drehmomentes und der vorgegebenen Drehzahl, ist der magnetische Statorfluss der elektrischen Maschine 10 reduziert im Vergleich zu dem magnetischen Statorfluss der elektrischen Maschine 10 bei dem Betreiben der elektrischen Maschine 10 in dem ersten Betriebsmodus, mit der resultierenden Abgabe des vorgegebenen Drehmomentes und der vorgegebenen Drehzahl. Mit Schritt 460 endet das Verfahren.

## Patentansprüche

1. Verfahren (400) zum Betreiben einer elektrischen Maschine (10) zur Abgabe eines vorgegebenen Drehmomentes und einer vorgegebenen Drehzahl mit den Schritten:
Bereitstellen (420) eines ersten und eines zweiten Betriebsmodus für das Betreiben der elektrischen Maschine (10)
Erfassen (430) einer Temperatur der elektrischen Maschine (10);
Betreiben der elektrischen Maschine (10) in dem ersten Betriebsmodus (440) wenn die erfasste Temperatur einen Schwellenwert unterschreitet und Betreiben der elektrischen Maschine (10) in dem zweiten Betriebsmodus (450) wenn die erfasste Temperatur dem Schwellenwert entspricht oder diesen überschreitet,
**dadurch gekennzeichnet, dass**
bei dem Betreiben der elektrischen Maschine (10) in dem zweiten Betriebsmodus (450), mit der resultierenden Abgabe des vorgegebenen Drehmomentes und der vorgegebenen Drehzahl, der magnetische Statorfluss der elektrischen Maschine (10) reduziert ist im Vergleich zu dem magnetischen Statorfluss der elektrischen Maschine (10) bei dem Betreiben der elektrischen Maschine (10) in dem ersten Betriebsmodus (440), mit der resultierenden Abgabe des vorgegebenen Drehmomentes und der vorgegebenen Drehzahl;
wobei das Verfahren ferner umfasst:
Einschalten eines aktiven Kurzschlusses bei dem Betreiben der elektrischen Maschine (10) in dem zweiten Betriebsmodus (450) bei dem reduzierten magnetischen Statorfluss der elektrischen Maschine, so dass sich verringerte Stromamplituden ergeben.

2. Verfahren (400) zur Regelung der elektrischen Maschine (10) nach Anspruch 1, wobei in dem zweiten Betriebsmodus (450) die Reduktion des magnetischen Statorflusses der elektrischen Maschine (10) mittels des Feldschwächreglers erfolgt.

3. Verfahren (400) zur Regelung der elektrischen Maschine (10) nach Anspruch 1 oder 2, wobei in dem zweiten Betriebsmodus (450) die Reduktion des magnetischen Statorflusses der elektrischen Maschine (10) mittels einer Erhöhung des negativen d-Stroms erfolgt.

4. Verfahren (400) zur Regelung der elektrischen Maschine (10) nach einem der vorhergehenden Ansprüche, wobei in dem zweiten Betriebsmodus (450) mit steigender erfasster Temperatur der elektrischen Maschine (10) der magnetische Statorfluss der elektrischen Maschine (10) stärker reduziert wird.

5. Verfahren (400) zur Regelung der elektrischen Maschine (10) nach einem der vorhergehenden Ansprüche, wobei das Erfassen (430) der Temperatur die Ermittlung der Temperatur des Rotors (20) der elektrischen Maschine (10) oder der Magnete (30) der elektrischen Maschine (10) umfasst.

6. Computerprogramm, das eingerichtet ist, das Verfahren (400) gemäß einem der Ansprüche 1 bis 5 auszuführen.

7. Maschinenlesbares Speichermedium, auf dem das Computerprogramm nach Anspruch 6 gespeichert ist.

8. Logikeinheit (110) zum Betreiben einer elektrischen Maschine (10) zur Abgabe eines vorgegebenen Drehmomentes und einer vorgegebenen Drehzahl wobei die Logikeinheit (110) dazu eingerichtet ist,
einen ersten und einen zweiten Betriebsmodus für das Betreiben der elektrischen Maschine (10) bereitzustellen,
eine Temperatur der elektrischen Maschine (10) zu erfassen;
die elektrische Maschine (10) in dem ersten Betriebsmodus zu betreiben wenn die erfasste Temperatur einen Schwellenwert unterschreitet und die elektrische Maschine (10) in dem zweiten Betriebsmodus zu betreiben wenn die erfasste Temperatur dem Schwellenwert entspricht oder diesen überschreitet,
**dadurch gekennzeichnet, dass**
bei dem Betreiben der elektrischen Maschine (10) in dem zweiten Betriebsmodus, mit der resultierenden Abgabe des vorgegebenen Drehmomentes und der vorgegebenen Drehzahl, der magnetische Statorfluss der elektrischen Maschine (10) reduziert ist im Vergleich zu dem magnetischen Statorfluss der elektrischen Maschine (10) bei dem Betreiben der elektrischen Maschine (10) in dem ersten Betriebsmodus, mit der resultierenden Abgabe des vorgegebenen Drehmomentes und der vorgegebenen Drehzahl,
wobei die Logikeinheit (110) ferner dazu eingerichtet ist, einen aktiven Kurzschluss bei dem Betreiben der elektrischen Maschine (10) in dem zweiten Betriebsmodus (450) bei dem reduzierten magnetischen Statorfluss der elektrischen Maschine einzuschalten, so dass sich verringerte Stromamplituden ergeben.

9. Vorrichtung (140), insbesondere eine elektrische Maschine (10) oder eine Steuereinheit (150), mit einer Logikeinheit (110) nach Anspruch 8.

10. Antriebsstrang (200) eines Fahrzeugs (300) mit einer Vorrichtung (140) nach Anspruch 9.

11. Fahrzeug (300) mit einem Antriebsstrang (200) nach Anspruch 10.

## Claims

1. Method (400) for operating an electric machine (10) for outputting a predefined torque and a predefined rotational speed, having the steps of:
providing (420) a first and a second operating mode for operating the electric machine (10)
detecting (430) a temperature of the electric machine (10);
operating the electric machine (10) in the first operating mode (440) if the detected temperature falls below a threshold value and operating the electric machine (10) in the second operating mode (450) if the detected temperature is equal to or exceeds the threshold value,
**characterized in that**
when the electric machine (10) is being operated in the second operating mode (450), with the resulting output of the predefined torque and of the predefined rotational speed, the magnetic stator flux of the electric machine (10) is reduced compared to the magnetic stator flux of the electric machine (10) when the electric machine (10) is being operated in the first operating mode (440), with the resulting output of the predefined torque and of the predefined rotational speed;
wherein the method further comprises:
switching on an active short circuit when the electric machine (10) is being operated in the second operating mode (450) at the reduced magnetic stator flux of the electric machine, so that reduced current amplitudes arise.

2. Method (400) for controlling the electric machine (10) according to Claim 1, wherein, in the second operating mode (450), the reduction in the magnetic stator flux of the electric machine (10) is carried out by means of the fieldweakening controller.

3. Method (400) for controlling the electric machine (10) according to Claim 1 or 2, wherein, in the second operating mode (450), the reduction in the magnetic stator flux of the electric machine (10) is carried out by means of an increase in the negative d-current.

4. Method (400) for controlling the electric machine (10) according to one of the preceding claims, wherein, in the second operating mode (450), as the detected temperature of the electric machine (10) increases, the magnetic stator flux of the electric machine (10) is reduced to a greater extent.

5. Method (400) for controlling the electric machine (10) according to one of the preceding claims, wherein the detection (430) of the temperature comprises ascertaining the temperature of the rotor (20) of the electric machine (10) or of the magnets (30) of the electric machine (10).

6. Computer program which is configured to perform the method (400) according to one of Claims 1 to 5.

7. Machine-readable storage medium on which the computer program according to Claim 6 is stored.

8. Logic unit (110) for operating an electric machine (10) for outputting a predefined torque and a predefined rotational speed, wherein the logic unit (110) is configured
to provide a first and a second operating mode for operating the electric machine (10),
to detect a temperature of the electric machine (10);
to operate the electric machine (10) in the first operating mode if the detected temperature falls below a threshold value and to operate the electric machine (10) in the second operating mode if the detected temperature is equal to or exceeds the threshold value,
**characterized in that**
when the electric machine (10) is being operated in the second operating mode, with the resulting output of the predefined torque and of the predefined rotational speed, the magnetic stator flux of the electric machine (10) is reduced compared to the magnetic stator flux of the electric machine (10) when the electric machine (10) is being operated in the first operating mode, with the resulting output of the predefined torque and of the predefined rotational speed,
wherein the logic unit (110) is further configured to switch on an active short circuit when the electric machine (10) is being operated in the second operating mode (450) at the reduced magnetic stator flux of the electric machine, so that reduced current amplitudes arise.

9. Device (140), in particular an electric machine (10) or a control unit (150), having a logic unit (110) according to Claim 8.

10. Drive train (200) of a vehicle (300) having a device (140) according to Claim 9.

11. Vehicle (300) having a drive train (200) according to Claim 10.

## Revendications

1. Procédé (400) permettant de faire fonctionner une machine électrique (10) pour fournir un couple de rotation prédéfini et une vitesse de rotation prédéfinie, avec les étapes :
mise à disposition (420) d'un premier et d'un deuxième mode de fonctionnement pour faire fonctionner la machine électrique (10) détection (430) d'une température de la machine électrique (10) ;
fonctionnement de la machine électrique (10) dans le premier mode de fonctionnement (440) lorsque la température détectée ne dépasse pas une valeur de seuil et fonctionnement de la machine électrique (10) dans le deuxième mode de fonctionnement (450) lorsque la température détectée correspond à la valeur de seuil ou la dépasse,
**caractérisé en ce que**
lors du fonctionnement de la machine électrique (10) dans le deuxième mode de fonctionnement (450), avec la fourniture en résultant du couple de rotation prédéfini et de la vitesse de rotation prédéfinie, le flux de stator magnétique de la machine électrique (10) est réduit en comparaison avec le flux de stator magnétique de la machine électrique (10) lors du fonctionnement de la machine électrique (10) dans le premier mode de fonctionnement (440), avec la fourniture en résultant du couple de rotation prédéfini et de la vitesse de rotation prédéfinie ;
le procédé comprenant en outre :
la mise en marche d'un court-circuit actif lors du fonctionnement de la machine électrique (10) dans le deuxième mode de fonctionnement (450) en présence du flux de stator magnétique réduit de la machine électrique, de telle sorte qu'il en découle des amplitudes de courant réduites.

2. Procédé (400) destiné à réguler la machine électrique (10) selon la revendication 1, le flux de stator magnétique de la machine électrique (10) étant réduit au moyen du système régulateur d'affaiblissement de champ dans le deuxième mode de fonctionnement (450).

3. Procédé (400) destiné à réguler la machine électrique (10) selon la revendication 1 ou 2, le flux de stator magnétique de la machine électrique (10) étant réduit au moyen d'une augmentation du courant d négatif dans le deuxième mode de fonctionnement (450).

4. Procédé (400) destiné à réguler la machine électrique (10) selon l'une des revendications précédentes, le flux de stator magnétique de la machine électrique (10) étant réduit dans une plus grande mesure dans le deuxième mode de fonctionnement (450) lorsque la température détectée de la machine électrique (10) augmente.

5. Procédé (400) destiné à réguler la machine électrique (10) selon l'une des revendications précédentes, la détection (430) de la température comprenant la détermination de la température du rotor (20) de la machine électrique (10) ou des aimants (30) de la machine électrique (10).

6. Programme informatique, qui est mis au point pour exécuter le procédé (400) selon l'une des revendications 1 à 5.

7. Support de stockage lisible par machine, sur lequel est stocké le programme informatique selon la revendication 6.

8. Unité logique (110) destinée à faire fonctionner une machine électrique (10) pour fournir un couple de rotation prédéfini et une vitesse de rotation prédéfinie, l'unité logique (110) étant mise au point pour
mettre à disposition un premier et un deuxième mode de fonctionnement pour faire fonctionner la machine électrique (10),
détecter une température de la machine électrique (10) ;
faire fonctionner la machine électrique (10) dans le premier mode de fonctionnement lorsque la température détectée ne dépasse pas une valeur de seuil et pour faire fonctionner la machine électrique (10) dans le deuxième mode de fonctionnement lorsque la température détectée correspond à la valeur de seuil ou dépasse celle-ci,
**caractérisée en ce que**
lors du fonctionnement de la machine électrique (10) dans le deuxième mode de fonctionnement, avec la fourniture en résultant du couple de rotation prédéfini et de la vitesse de rotation prédéfinie, le flux de stator magnétique de la machine électrique (10) est réduit en comparaison avec le flux de stator magnétique de la machine électrique (10) lors du fonctionnement de la machine électrique (10) dans le premier mode de fonctionnement, avec la fourniture en résultant du couple de rotation prédéfini et de la vitesse de rotation prédéfinie, l'unité logique (110) étant en outre mise au point pour mettre en marche un court-circuit actif lors du fonctionnement de la machine électrique (10) dans le deuxième mode de fonctionnement (450) en présence du flux de stator magnétique réduit de la machine électrique, de telle sorte que des amplitudes de courant réduites en découlent.

9. Dispositif (140), en particulier machine électrique (10) ou unité de commande (150), avec une unité logique (110) selon la revendication 8.

10. Chaîne cinématique (200) d'un véhicule (300) avec un dispositif (140) selon la revendication 9.

11. Véhicule (300) avec une chaîne cinématique (200) selon la revendication 10.
